# FASCICULE DE BREVET EUROPEEN

(11) **EP 3 233 443 B1**
(45) Date de publication et mention de la délivrance du brevet: **05.02.2020**
(21) Numéro de dépôt: 15817985.3
(22) Date de dépôt: 10.12.2015
(51) Int. Cl.: B29C 70/82, B29C 65/44, B29C 65/36

(54) **DISPOSITIF DE POSE D'UN FIL CONDUCTEUR POUR SOUDURE**
VORRICHTUNG ZUM VERLEGEN EINES LEITFÄHIGEN DRAHTES ZUM SCHWEISSEN
DEVICE FOR LAYING A CONDUCTIVE WIRE FOR WELDING

(30) Priorité: 18.12.2014 FR 1462682
(43) Date de publication de la demande: 25.10.2017
(73) Titulaire: Renault S.A.S., 92100 Boulogne-Billancourt (FR)
(72) Inventeur: TONEL, Alix, 91470 Les Molieres (FR); PHILIPPE, Aurélien, 57970 Yutz (FR); MIHALUTA, Marius, 57800 Freyming-Merlebach (FR)
(86) Numéro de dépôt international: PCT/FR2015/053406
(87) Numéro de publication internationale: WO 2016/097539

(56) Documents cités:
- EP-A1- 0 496 669
- WO-A1-2009/076749

## Description

La présente invention se rapporte à un dispositif permettant de réaliser une soudure entre deux pièces thermoplastiques telles que des hayons, des becquets, des portes latérales, etc.

Jusqu'à présent ce type de soudure était réalisé par laser, collage, ou avec un apport de matière liquide ou solide sous la forme de "patch". Ces patchs sont constitués de matière des pièces à souder dans laquelle on a inséré des particules conductrices. Les particules conductrices sont chauffées par induction ce qui fait fondre la matière et ainsi soude les pièces. Mais ce type de soudure n'est pas adapté aux surfaces évolutives complexes, ni adapté aux faibles rayons de courbures des pistes de soudure, d'autre part le système de préparation avec de la matière liquide est coûteux et compliqué à gérer suivant la longueur de soudure. D'autre part, cet apport de matière provoque une surépaisseur entre les pièces après soudure et ce de manière non constante.

Le document WO2009/076749 divulgue un système et une méthode pour placer un implant résistif pour assemblage par soudure de composants plastiques. L'implant résistif sous forme de grille de ce document, peut poser des difficultés d'adaptation aux surfaces évolutives complexes, notamment aux faibles rayons de courbures des pistes de soudure.

Le document EP0496669 divulgue un dispositif de dépose d'un fil conducteur sur une surface thermoplastique. Ce dispositif comprend deux roues dentées qui engrènent un fil conducteur de façon à donner une ondulation au fil conducteur et un système de chauffage dudit fil conducteur.

L'objet de la présente invention est de proposer un dispositif qui permette de souder deux pièces entre elles, à la fois simple et économique, et qui soit adapté à des surfaces 3D, à de faibles rayons de courbure et sans produire de surépaisseur.

L'invention consiste en un dispositif de dépose d'un fil conducteur sur une surface thermoplastique comprenant un pistolet et un fil conducteur, caractérisé en ce qu'il comprend deux roues dentées qui engrènent le fil conducteur de façon à donner une ondulation au fil conducteur et un système de chauffage dudit fil conducteur. Le chauffage du fil conducteur va permettre de le placer par incrustation sur la surface d'une des pièces à souder, il sera de nouveau chauffé pour réaliser la soudure des deux pièces.

Avantageusement, le fil est un acier nu. L'utilisation d'un acier au lieu de cuivre ou d'aluminium, procure de meilleures caractéristiques résistives et permet de réaliser une soudure à moindre coût.

Selon une caractéristique particulière, le système de chauffage est constitué de deux pôles électriques entre lesquels une partie du fil conducteur est mis en contact. La partie du fil conducteur va chauffer parce que parcouru par un courant électrique qui va relier les deux pôles de charge opposée.

Selon une autre caractéristique, il comprend un système de refroidissement. Le refroidissement va permettre de refroidir à la fois, le fil conducteur après les pôles électriques, et le support de la pièce à souder afin que le fil reste figé sur ladite pièce.

Avantageusement, le système de refroidissement est constitué par un jet d'air comprimé. Le système de refroidissement envoie un jet d'air en continu localement sur le fil incrusté. L'air est pris sur une alimentation d'entrée, par exemple de 6 bars, et régulé à la demande par un robinet intermédiaire.

Selon l'invention, le dispositif comprend deux roues dentées qui engrènent le fil conducteur. Le fil conducteur doit avancer de façon régulière et les roues dentées permettent l'avancement du fil.

Avantageusement, les deux roues dentées donnent une ondulation au fil conducteur d'une largeur prédéterminée. Les roues dentées permettent de réaliser une ondulation du fil conducteur et elles sont dimensionnées et interchangeables pour des ondulations de 1,5mm, 2 mm ou plus, suivant le besoin. Les dents des deux roues sont identiques et elles sont plus ou moins grandes selon la taille des ondulations souhaitées. Cette ondulation du fil est avantageuse pour structurer le fil afin ; qu'il soit mieux stabilisé durant sa phase de dilatation pendant la chauffe dans la matière fusionnée, et pour assurer une largeur de soudure plus importante, pour une meilleure tenue mécanique et étanchéité.

Selon une autre caractéristique, le dispositif comprend une roue de dépose du fil conducteur. Cette roue aura de préférence une vitesse égale à celle des roues dentées et sera disposée après celles-ci dans le sens de déroulement du fil. Elle va servir à positionner le fil conducteur sur la surface d'une ces pièces à souder.

Avantageusement, la roue comprend une rainure périphérique de profondeur égale à la moitié du diamètre du fil conducteur. Ainsi le fil conducteur disposé dans la rainure dépasse de celle-ci et peut être incrusté d'un demi-diamètre dans une des pièces à souder.

Avantageusement, la rainure périphérique a une largeur égale à la largeur de l'ondulation du fil conducteur. La roue de dépose va prendre le fil, après qu'il ait été ondulé par les roues dentées, sur toute sa largeur pour le poser sur la surface à souder et le poids de l'ensemble du dispositif procure un effort suffisant pour incruster le fil. Aucun effort de la part de l'opérateur n'est nécessaire, juste un effort de maintien du pistolet dans la main.

Avantageusement, la roue de dépose constitue un des pôles électriques. Une partie du fil conducteur va relier un premier pole à la roue de dépose, constituant alors le deuxième pole, le courant va donc passer dans cette partie du fil conducteur pour relier les deux pôles et cette partie du fil conducteur va chauffer jusqu'à qu'il quitte la roue de dépose pour s'incruster dans la pièce à souder. Il sera donc suffisamment chaud pour rester sur la pièce à souder.

Avantageusement, le dispositif comprend un moteur d'entraînement du fil conducteur. Le moteur a pour fonction de compenser les efforts cumulés nécessaires pour débobiner et onduler le fil, et également, l'ensemble des frottements des liaisons mécaniques. Aucun effort de la part de l'opérateur n'est nécessaire, juste un effort de maintien du pistolet dans la main.

D'autres avantages pourront encore apparaître à l'homme du métier à la lecture des exemples ci-dessous, illustrés par les figures annexées, donnés à titre d'exemple.
- La figure 1 est une vue de profil du dispositif selon l'invention,
- La figure 2 est une vue de dessous de la figure 1,
- La figure 3 est une vue de dessus de la figure 1,
- La figure 4 est une coupe selon IV-IV,
- La figure 5 est une vue du fil après pose,
- La figure 6 est le détail de la roue de dépose.

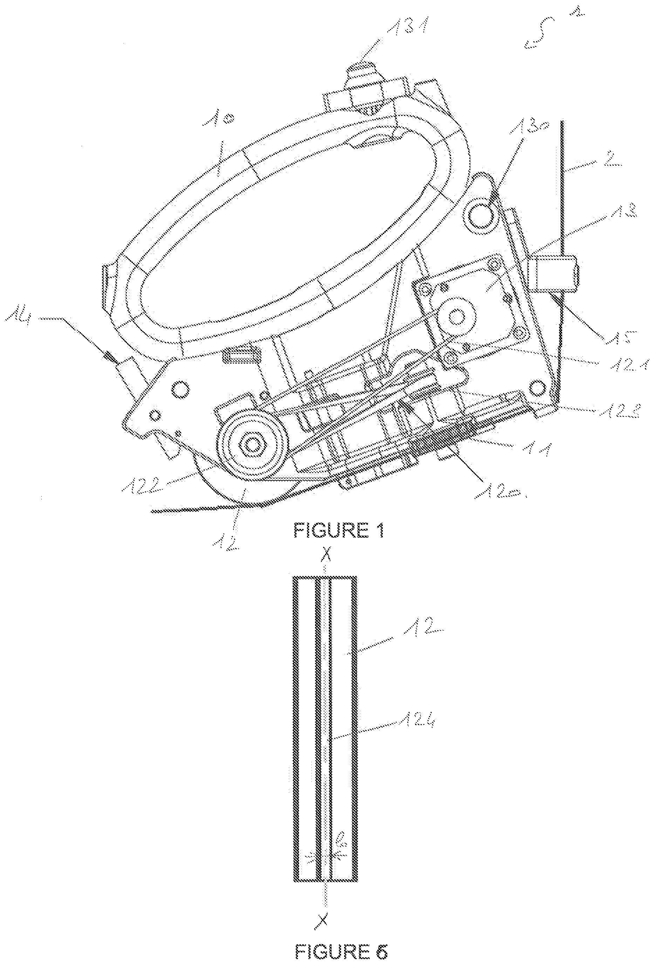

Dans la suite de la description, on considèrera que le haut correspond au haut de la figure 1 et le bas au bas de la figure 1.

Le dispositif selon l'invention tel que visible à la figure 1 comprend un pistolet 1 et un fil 2 alimenté par une bobine (non représenté) et arrivant par un support 15. Le pistolet 1 comprend une poignée 10 par laquelle l'opérateur pourra actionner le pistolet 1. Il comprend aussi deux roues dentées 11 et une roue de dépose 12. La roue de dépose 12 est entraînée par une courroie 121 reliée à un moteur électrique d'entraînement 13 et les roues dentées 11 sont entraînées par une courroie 120 reliée à la roue de dépose 12. Ainsi, les roues dentées 11 et la roue de dépose 12 sont entraînées ensemble de façon coordonnée. Les courroies 120, 121 sont reliées aux roues par des poulies crantées 122, 123 de façon connue. La courroie 121 d'entraînement entre l'axe moteur 13 et l'axe de la roue de dépose 12 est crantée. Il y a deux courroies 120 crantées d'entraînement de la roue de dépose 12 vers l'axe de chacune des roues dentées 11 d'ondulation du fil 2, de part et d'autre du corps du pistolet 1.

Le moteur 13 a pour fonction de compenser les efforts cumulés nécessaires pour débobiner et onduler le fil 2, et également, l'ensemble des frottements des liaisons mécaniques.

Le pistolet 1 comprend aussi une buse 14 pour de l'air de refroidissement. Cette buse 14 est alimentée par de l'air comprimé.

La vitesse du moteur électrique 13 est réglée par un potentiomètre 130, et commandé par un bouton de commande 131.

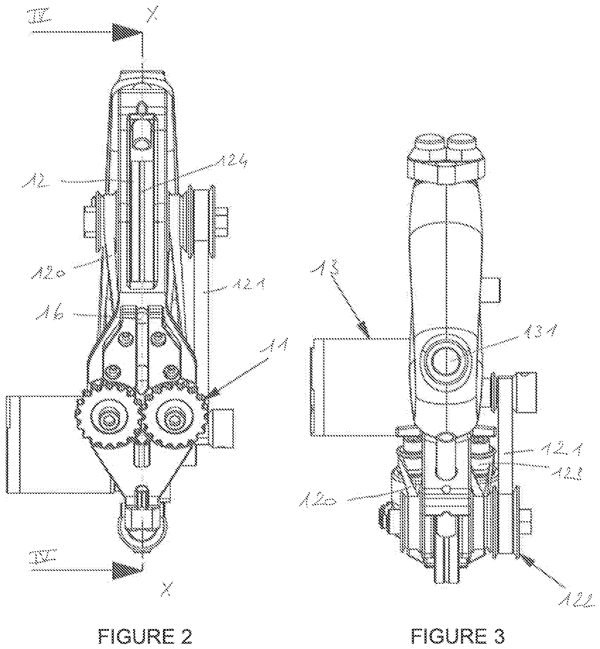

On voit sur le figure 2 que les deux roues dentées 11 sont en vis-à-vis de part et d'autre d'un axe XX pour pouvoir s'engrener. La roue de dépose 12 a un axe de rotation perpendiculaire à l'axe XX, et présente une rainure périphérique 124 qui est située sur l'axe XX. La rainure 124 a une profondeur h correspondant à la moitié du diamètre du fil 2. Sa largeur l₀ correspond à la largeur de l'ondulation 1 du fil 2, l₀ sera de préférence légèrement supérieur à 1.

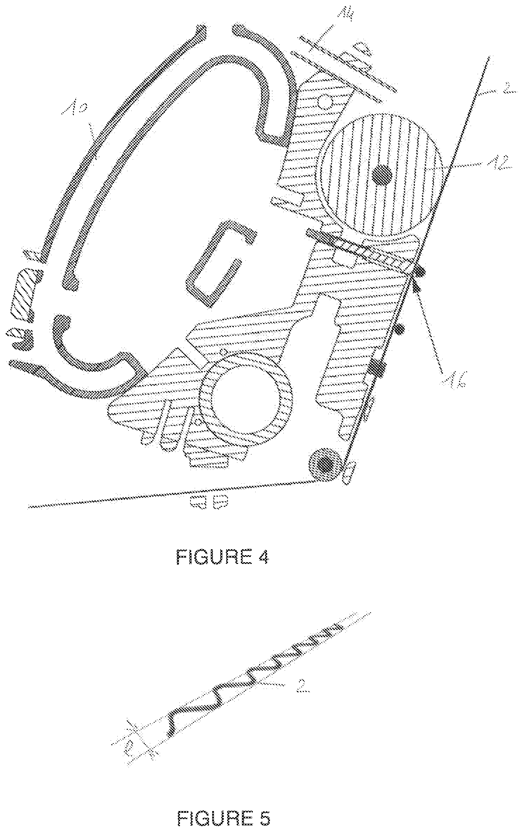

Comme on peut le voir sur la figure 2 et la coupe de la figure 4, un pole électrique 16 est disposé entre la roue de dépose 12 et les roues dentées 11. Le deuxième pole est constitué par la roue de dépose 12. Le pole électrique 16 est poussé par un ressort (non représenté) vers le fil 2. La distance entre le pole 16 et la roue de dépose 12 pourra être d'environ 30mm. Les roues dentées 11 pour l'ondulation du fil sont dimensionnées et interchangeables suivant besoin, les ondulations pourront être de 1,5-2mm et au-delà. Dans ce cas la roue de dépose 12 devra aussi être changée pour tenir compte de la largeur des ondulations du fil 2 souhaitée. Les caractéristiques du fil 2 résistif pourra, par exemple, être les suivantes: un diamètre de 0,5mm, une section s=0,2 mm², une résistivité de 5,6Ωm, pour un courant de 4,9 A, une puissance électrique=134,8Wm et une charge de 4,5 W/cm². L'ondulation du fil 2 est de préférence d'une largeur 1,5 à 2mm ou plus, pour structurer le fil afin qu'il soit stabilisé durant sa phase de dilatation pendant la chauffe et dans la matière fusionnée, cela permet d'assurer une largeur constante de soudure entre 3 et 4mm. Il est possible de choisir d'autres caractéristiques de fil en fonction de l'application souhaitée.

Nous allons maintenant décrire le fonctionnement du dispositif.

Le fil 2 arrive par le guide 15 et est conduit vers les roues dentées 11 entre lesquelles il passe pour être ondulé. L'ondulation du fil 2 a une largeur 1. Il va ensuite entrer en contact avec le pole 16 et la roue de dépose 12. Les deux pôles étant de charge opposée, un courant va s'établir dans le fil conducteur 2 entre les deux pôles 12 et 16, ce qui va provoquer l'échauffement du fil 2 Le fil 2 dépassant d'un demi diamètre de la rainure 124 de la roue de dépose 12, on va ensuite pouvoir déposer le fil 2 chaud sur la pièce à souder avec la roue de dépose. La pièce à souder étant un thermoplastique, le fil 2 va s'incruster dans la pièce au fur et à mesure de l'avancement du pistolet 1. Le fil 2 et la pièce vont ensuite être refroidies par de l'air envoyé par la buse 14. La buse 14 du système de refroidissement envoie un jet d'air en continu localement sur le fil 2 incrusté juste derrière la roue de dépose 12, et sur la roue elle-même. L'air est pris sur une alimentation d'entrée de 6 bars et régulé à la demande par un robinet intermédiaire. A la fin de trajectoire de dépose du fil, quand la roue de dépose 12 (ou d'incrustation) quitte le contact de la pièce à la fin de la dépose du fil 2, l'opérateur continue d'actionner le moteur afin de dérouler une réserve de fil 2 suffisante, la partie du fil 2 n'étant plus en contact avec la roue de dépose 12, la chauffe s'arrête. L'opérateur arrête d'actionner le bouton 131 du moteur 13 et coupe le fil 2 à l'aide d'une pince. De préférence, on laissera du fil de chaque coté de la pièce à souder de façon à pouvoir chauffer le fil après la pose de la deuxième pièce à souder pour y faire passer un courant électrique.

L'avance du pistolet 1 par l'opérateur se fait à une vitesse approximative de 2m/mn.

L'action des commandes électriques pour chauffage fil et démarrage du moteur 13 est simultanée par appui sur le bouton 131.

On aura de préférence, une alimentation générale électrique du pistolet à 220 V, un circuit électrique pour activer la chauffe du fil avec une alimentation qui permet d'imposer une valeur d'intensité, un entraxe entre les pôles (pôle sur ressort + pôle roue de dépose) pour chauffage du fil de 30mm, un circuit électrique pour activer le moteur avec une alimentation de 24V, un moteur de 24V en continu, avec une puissance P = 4W, une vitesse rotation max = 230tr/mn, un couple sortie = 20Ncm, une intensité max = 243mA et une résistance interne = 43ohm.

## Revendications

1. Dispositif de dépose d'un fil conducteur (2) sur une surface thermoplastique comprenant un pistolet (1) et un fil conducteur (2), **caractérisé en ce qu'**il comprend deux roues dentées (11) qui engrènent le fil conducteur (2) de façon à donner une ondulation au fil conducteur (2) et un système de chauffage dudit fil conducteur (2).

2. Dispositif selon la revendication 1 **caractérisé en ce que** le fil (2) est un acier nu.

3. Dispositif selon une des revendications précédentes **caractérisé en ce que** le système de chauffage est constitué de deux pôles (12, 16) électriques entre lesquels une partie du fil conducteur (2) est mise en contact.

4. Dispositif selon une des revendications précédentes **caractérisé en ce qu'**il comprend un système de refroidissement (14) .

5. Dispositif selon la revendication précédente **caractérisé en ce que** le système de refroidissement (14) est constitué par un jet d'air comprimé.

6. Dispositif selon une des revendications précédentes **caractérisé en ce que** l'ondulation donnée au fil conducteur (2) est d'une largeur prédéterminée l par l'engrainement des roues dentées.

7. Dispositif selon une des revendications précédentes **caractérisé en ce qu'**il comprend une roue de dépose (12) du fil conducteur (2).

8. Dispositif selon la revendication précédente **caractérisé en ce que** la roue de dépose (12) comprend une rainure périphérique (124) de profondeur égale à la moitié du diamètre du fil conducteur (2).

9. Dispositif selon les revendications 7 et 8 **caractérisé en ce que** la rainure périphérique (124) a une largeur l₀ égale à la largeur l de l'ondulation du fil conducteur (2).

10. Dispositif selon une des revendications 8 à 9 **caractérisé en ce que** la roue de dépose (12) constitue un des pôles électriques.

11. Dispositif selon une des revendications précédentes **caractérisé en ce qu'**il comprend un moteur d'entraînement (13) du fil conducteur (2).

## Patentansprüche

1. Vorrichtung zum Verlegen eines leitfähigen Drahtes (2) auf einer thermoplastischen Oberfläche, welche eine Pistole (1) und einen leitfähigen Draht (2) umfasst, **dadurch gekennzeichnet, dass** sie zwei Zahnräder (11), welche an dem leitfähigen Draht (2) angreifen, um dem leitfähigen Draht (2) eine Welligkeit zu verleihen, und ein System zur Erwärmung des leitfähigen Drahtes (2) umfassen.

2. Vorrichtung nach Anspruch 1, **dadurch gekennzeichnet, dass** der Draht (2) ein blanker Stahldraht ist.

3. Vorrichtung nach einem der vorhergehenden Ansprüche, **dadurch gekennzeichnet, dass** das System zur Erwärmung aus zwei elektrischen Polen (12, 16) besteht, zwischen denen ein Teil des leitfähigen Drahtes (2) in Kontakt gebracht wird.

4. Vorrichtung nach einem der vorhergehenden Ansprüche, **dadurch gekennzeichnet, dass** sie ein Kühlsystem (14) umfasst.

5. Vorrichtung nach dem vorhergehenden Anspruch, **dadurch gekennzeichnet, dass** das Kühlsystem (14) aus einem Druckluftstrahl besteht.

6. Vorrichtung nach einem der vorhergehenden Ansprüche, **dadurch gekennzeichnet, dass** die Welligkeit, die dem leitfähigen Draht (2) verliehen wird, eine durch den Eingriff der Zahnräder vorbestimmte Breite l aufweist.

7. Vorrichtung nach einem der vorhergehenden Ansprüche, **dadurch gekennzeichnet, dass** sie ein Rad zum Verlegen (12) des leitfähigen Drahtes (2) umfasst.

8. Vorrichtung nach dem vorhergehenden Anspruch, **dadurch gekennzeichnet, dass** das Rad zum Verlegen (12) eine Umfangsnut (124) mit einer Tiefe umfasst, die gleich der Hälfte des Durchmessers des leitfähigen Drahtes (2) ist.

9. Vorrichtung nach den Ansprüchen 7 und 8, **dadurch gekennzeichnet, dass** die Umfangsnut (124) eine Breite l₀ aufweist, die gleich der Breite l der Welligkeit des leitfähigen Drahtes (2) ist.

10. Vorrichtung nach einem der Ansprüche 8 bis 9, **dadurch gekennzeichnet, dass** das Rad zum Verlegen (12) einen der elektrischen Pole bildet.

11. Vorrichtung nach einem der vorhergehenden Ansprüche, **dadurch gekennzeichnet, dass** sie einen Antriebsmotor (13) für den leitfähigen Draht (2) umfasst.

## Claims

1. Device for laying a conductive wire (2) on a thermoplastic surface comprising a gun (1) and a conductive wire (2), **characterized in that** it comprises two toothed wheels (11) which engage the conductive wire (2) so as to corrugate the conductive wire (2), and a system for heating said conductive wire (2).

2. Device according to Claim 1, **characterized in that** the wire (2) is a bare steel.

3. Device according to either of the preceding claims, **characterized in that** the heating system consists of two electric poles (12, 16) between which part of the conductive wire (2) is brought into contact.

4. Device according to one of the preceding claims, **characterized in that** it comprises a cooling system (14).

5. Device according to the preceding claim, **characterized in that** the cooling system (14) consists of a jet of compressed air.

6. Device according to one of the preceding claims, **characterized in that** the corrugation imparted to the conductive wire (2) is of a width 1 predetermined by the intermeshing of the toothed wheels.

7. Device according to one of the preceding claims, **characterized in that** it comprises a laying wheel (12) for laying the conductive wire (2).

8. Device according to the preceding claim, **characterized in that** the laying wheel (12) comprises a peripheral groove (124) of a depth equal to half the diameter of the conductive wire (2).

9. Device according to Claims 7 and 8, **characterized in that** the peripheral groove (124) has a width l₀ equal to the width 1 of the corrugation of the conductive wire (2) .

10. Device according to either of Claims 8 and 9, **characterized in that** the laying wheel (12) constitutes one of the electrical poles.

11. Device according to one of the preceding claims, **characterized in that** it comprises a drive motor (13) for driving the conductive wire (2).
